# EUROPÄISCHE PATENTSCHRIFT

(11) **EP 1 340 923 B1**
(45) Veröffentlichungstag und Bekanntmachung des Hinweises auf die Patenterteilung: **08.09.2004**
(21) Anmeldenummer: 02026725.8
(22) Anmeldetag: 30.11.2002
(51) Int. Cl.: F16D 3/02, F16D 7/04

(54) **Kupplung, insbesondere Drehmomentbegrenzungskupplung**
Coupling, particularly a torque limiting coupling
Accouplement, particulièrement accouplement limitateur de couple

(30) Priorität: 28.02.2002 US 87287
(43) Veröffentlichungstag der Anmeldung: 03.09.2003
(73) Patentinhaber: GKN Walterscheid GmbH, 53797 Lohmar (DE)
(72) Erfinder: Schott, Wilhelm, Dipl-Ing., 50996 Köln (DE); Sarfert, Andreas, Dipl.-Ing., 53225 Bonn (DE); Zubik, John, Lockport, Illinois 60441 (US)
(74) Vertreter: Harwardt, Günther, Dipl.-Ing.

(56) Entgegenhaltungen:
- EP-A- 0 870 945
- US-A- 2 800 004
- US-A- 4 932 809
- US-A- 5 938 534
- US-A- 5 980 388

## Beschreibung

Die Erfindung betrifft eine Kupplung, insbesondere Drehmomentbegrenzungskupplung mit
- einer Längsachse (1),
- einem Kupplungsgehäuse,
   - das rohrförmig gestaltet ist und
   - das einen Aufnahmebohrungsabschnitt aufweist,
- einem Kupplungsinnenteil,
   - das in dem Aufnahmebohrungsabschnitt des Kupplungsgehäuses aufgenommen ist, so dass es vom Kupplungsgehäuse koaxial umgeben ist, und
- Mitnahmeelementen,
   - die eine Drehmitnahme zwischen dem Kupplungsgehäuse und dem Kupplungsinnenteil bewirken.

Eine solche Kupplung ist aus EP-A-0 870 945 bekannt.

Kupplungen, insbesondere Drehmomentbegrenzungskupplungen, die als Überlastkupplungen dienen, finden allgemein Einsatz im Antrieb von landwirtschaftlichen Geräten bzw. selbstfahrenden Arbeitsmaschinen und sollen einzelne angetriebene Aggregate oder Baugruppen oder aber auch einzelne Arbeitswerkzeuge bei Überlastung absichern. Wenn beispielsweise einem Antrieb mehrere solcher Kupplungen zugeordnet sind, d.h. gemeinsam angetrieben werden und zur Weiterleitung des Drehmomentes an davon abgezweigt anzutreibende Arbeitswerkzeuge dienen, besteht die Gefahr, dass aufgrund der Arbeitsbreiten und der Flexibilität der Maschinenrahmen und der gemeinsamen Antriebswelle, das Ansprechverhalten der Kupplung beim Überlastfall negativ beeinflusst wird.

Es ist also in solchen Fällen keine Wiederholgenauigkeit beim Abschalten gegeben, weil Zwängungen auftreten.

Der Erfindung liegt daher die Aufgabe zugrunde, eine Kupplung, insbesondere Drehmomentbegrenzungskupplung zu schaffen, die unabhängig von der Anordnung im Antriebstrang ein sicheres Ansprechen mit der nötigen Wiederholgenauigkeit gewährleistet.

Gelöst wird diese Aufgabe erfindungsgemäß durch eine Kupplung, insbesondere Drehmomentbegrenzungskupplung, die dadurch gekennzeichnet ist, dass
- das Kupplungsgehäuse
   ausgehend von einem ersten axialen Ende einen Anschlussbohrungsabschnitt aufweist, der in einer die Längsachse rechtwinklig schneidenden Querschnittsebene gesehen, eine umlaufende Innenkontur aufweist, die von einem Kreis abweicht,
- ein Anschlusselement, vorgesehen ist,
   das einen Anschlussabschnitt aufweist, mit dem es in dem Anschlussbohrungsabschnitt des Kupplungsgehäuses aufgenommen ist, der in einer die Längsachse rechtwinklig schneidenden Querschnittsebene eine Außenkontur aufweist, die der Innenkontur des Kupplungsgehäuses mit einem radialen Abstand folgt, so dass Spiel zwischen den beiden gegeben ist, und
- Verbindungsmittel vorgesehen sind,
   die das Kupplungsgehäuse mit dem Anschlusselement so verbinden, dass beide begrenzt relativ zueinander beweglich gehalten sind.

Von Vorteil bei dieser Ausbildung ist, dass das Kupplungsinnenteil zusammen mit dem Gehäuse gegenüber dem Anschlusselement Bewegungen ausführen kann, so dass Ungenauigkeiten hinsichtlich der Lage des Kupplungsinnenteils, in das das Drehmoment eingeleitet wird, zusammen mit dem Kupplungsaußenteil gegenüber dem Anschlusselement, das zur Ableitung des Drehmomentes dient, dadurch das diese Winkel- und/oder Axialbewegungen und/oder Radialbewegungen zueinander ausführen können, ausgeglichen werden. Hierdurch können Zwängungen vermieden werden. Das Ansprechverhalten der Kupplung bleibt unbeeinflusst.

In Ausgestaltung der Erfindung ist vorgesehen, dass die Verbindungsmittel eine begrenzte Winkel- und/oder Axialbewegung und/oder Radialbewegung zulassen. Deren Größe wird an den Anwendungsfall angepasst. Eine Winkelbewegung oder auch radiale Bewegung zwischen dem Anschlusselement und dem Kupplungsinnenteil wird alleine durch die Aufnahme des Anschlussabschnittes mit einem Spalt im Verhältnis zur Innenkontur des Anschlussbohrungsabschnittes des Kupplungsgehäuses erreicht.

Vorzugsweise ist vorgesehen, dass die Verbindungsmittel im Bereich des Anschlussbohrungsabschnitts des Kupplungsgehäuses und des Anschlussabschnitts des Anschlusselements angeordnet sind und mindestens einen Durchbruch im Kupplungsgehäuse und je Durchbruch eine(-n) in jeweils eine Aufnahmebohrung des Anschlusselementes einsetzbaren Stift oder Schraube umfassen. Als Stift kommt dabei vorzugsweise ein Kerbstift und als Schraube vorzugsweise eine Innensechskantschraube in Frage. Die Beweglichkeit des Kupplungsgehäuses zum Anschlusselement bzw. umgekehrt wird dadurch erreicht, dass der Stift bzw. die Schraube dem zugehörigen Durchbruch im Kupplungsgehäuse mit Spiel durchgreift.

Ferner ist vorgesehen, dass das Kupplungsgehäuse über seine gesamte axiale Länge parallel zur Längsachse verlaufende rippenförmige Ausformungen aufweist, die in der Innenkontur des Kupplungsgehäuses Nuten bilden. Bei dieser Ausführungsform sind Anschlussbohrungsabschnitt und Aufnahmebohrungsabschnitt des Kupplungsgehäuses unter Berücksichtung des Spiels zwischen beiden gleich gestaltet. Dies ist besonders wirtschaftlich. Die Außenkontur des Anschlusselementes ist im Bereich des Anschlussabschnittes der Innenkontur des Kupplungsgehäuses folgend mit rippenförmigen Erhebungen und zwischen diesen teilzylindrischen Flächen gestaltet. Jedoch ist ein Spalt vorhanden. Die Stifte bzw. die Schrauben sind vorzugsweise im Bereich der zylindrischen Teilflächen vorgesehen.

Bevorzugte Gestaltungen der Kupplung sind in der Zeichnung schematisch dargestellt.

Es zeigt
- Figur 1: einen Längsschnitt durch eine erfindungsgemäße Kupplung,
- Figur 2: einen Schnitt II-II gemäß Figur 1 mit einer ersten Ausführungsform der Verbindungsmittel zwischen Kupplungsgehäuse und Anschlusselement,
- Figur 3: einen Schnitt III-III gemäß Figur 1 und
- Figur 4: als Einzelheit eine alternative Ausgestaltung der Verbindungsmittel zu denen gemäß Figur 2.

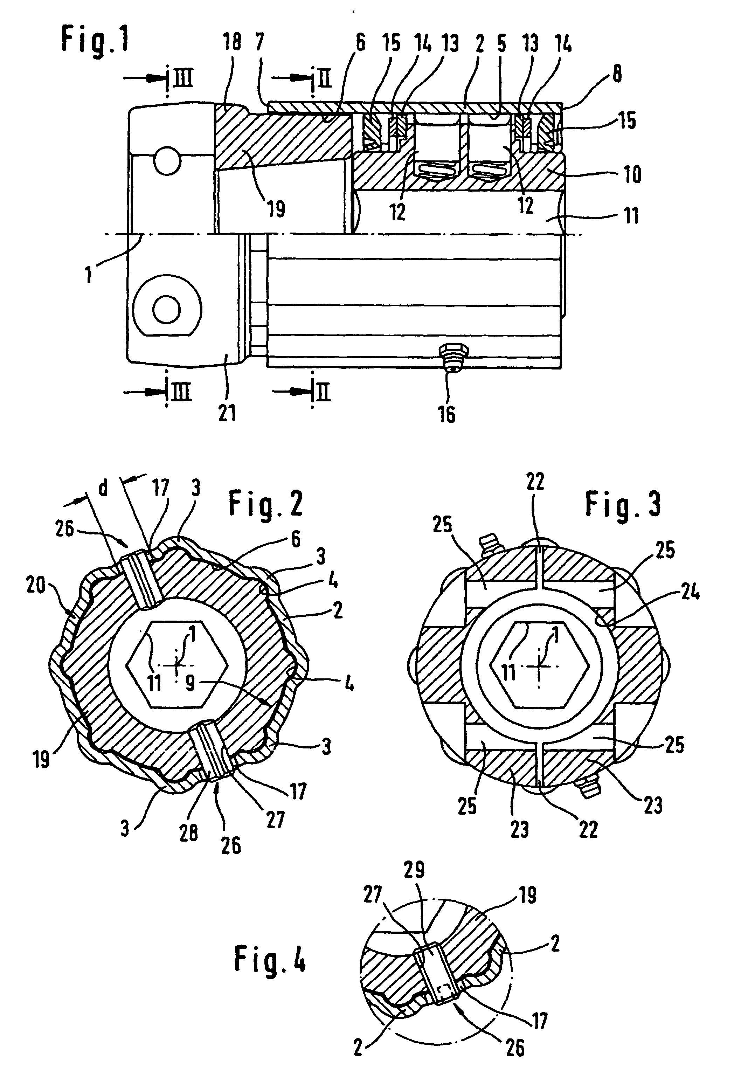

Die aus den Zeichnungsfiguren ersichtliche Kupplung umfasst ein auf der Längsachse 1 zentriertes Kupplungsgehäuse 2, das, wie insbesondere aus Figur 2 ersichtlich ist, parallel zur Längsachse 1 verlaufend Ausformungen 3 besitzt, die rippenartige Erhöhung an der Außenseite des Kupplungsgehäuses 2 bilden. Wenn das Kupplungsgehäuse 2 röhrförmig mit annähernd gleicher Wandungsstärke gestaltet ist, entstehen im Bereich der Ausformungen 3 an der Innenkontur 9 Nuten 4, die sich mit zylindrischen Teilflächen um die Längsachse 1 in Umfangsrichtung abwechseln. Das Kupplungsgehäuse 2 weist ein erstes axiales Ende 7 und diesem entfernt ein zweites axiales Ende 8 auf. Ausgehend vom ersten axialen Ende 7 dient die Innenkontur 9 des Kupplungsgehäuses 2 als Anschlussbohrungsabschnitt 6 und daran anschließend bis zum zweiten axialen Ende 8 als Aufnahmebohrungsabschnitt 5. In dem Aufnahmebohrungsabschnitt 5 ist das Kupplungsinnenteil 10 mit seiner Außenfläche gelagert. Das Kupplungsinnenteil 10 weist ferner eine zentrale Anschlussbohrung 11 auf, die auf der Längsachse 1 zentriert ist. In radial verlaufenden Bohrungen des Kupplungsinnenteils 10 sind Mitnahmeelemente 12 in Form von Sperrkörpern angeordnet, die federbelastet zur Einnahme einer über die Außenfläche des Kupplungsinnenteils 10 vorstehenden Position hin beaufschlagt werden und mit ihren Köpfen in Drehmomentübertragungsposition in die Nuten 4 des Kupplungsgehäuses 2 eingreifen. Das Kupplungsinnenteil 10 ist zwischen zwei Anlaufscheiben 13 durch Sicherungsringe 14, die in entsprechende Nuten des Kupplungsgehäuses 2 eingreifen, in axialer Richtung gehalten. Ferner sind Dichtungsringe 15 vorgesehen, die den Abschnitt, in dem sich die Mitnahmeelemente 12 befinden, nach außen abdichten.

Zur Abschmierung dient ein Schmiernippel 16 im Kupplungsgehäuse 2.

In dem vom ersten axialen Ende 7 ausgehenden Anschlussbohrungsabschnitt 6 ist ein Anschlusselement 18 mit seinem Anschlussabschnitt 19 aufgenommen. Der Anschlussabschnitt 19 weist im Querschnitt gesehen eine Außenkontur 20 auf, die der Innenkontur 9 des Kupplungsgehäuses 2 im Bereich des Anschlussbohrungsabschnitts 6 mit radialem Abstand folgt und somit von der Form eines Kreises abweicht. Der Anschlussabschnitt 19 weist zum Eingriff in die Nuten 4 entsprechend verteilt angeordnete rippenförmige Erhöhungen auf. Dazwischen sind zylindrische Teilflächen vorgesehen. Die Außenkontur 20 entspricht jedoch abmessungsmäßig nicht Innenkontur 9 sondern ist um ein bestimmtes Maß kleiner gestaltet, so dass das Anschlusselement 18 mit seinem Anschlussabschnitt 19 im Anschlussbohrungsabschnitt 6 des Kupplungsgehäuses 2 gegenüber dem auf der Längsachse 1 festgelegten Kupplungsgehäuse 2 radiale Bewegungen und Winkelbewegungen ausführen kann. Zusätzlich ist auch noch eine Axialbewegung möglich.

Der Anschlussabschnitt 19 ist mit einem Klemmabschnitt 21 verbunden, welcher zwei Backen 23 umfasst, die durch Schlitze 22 getrennt sind und eine zylindrische Klemmbohrung 24 bilden. Darüber hinaus weist auch der Klemmabschnitt 21 eine Längsbohrung auf, durch die eine in die Anschlussbohrung 11 des Kupplungsinnenteils 10 eingesteckte Welle hindurchgeführt werden kann. In den Backen 23 sind Schraubenbohrungen 25 vorgesehen, die von nicht dargestellten Schrauben durchsetzt werden, so dass die beiden Backen 23 gegeneinander verspannt werden können, wenn der Klemmabschnitt 21 beispielsweise auf einem Rohr, das als Eingangswelle für ein Getriebe dient, aufgesetzt ist. Anstelle einer zylindrischen Klemmbohrung 28 kann auch eine profilierte Bohrung vorgesehen werden.

Als Verbindungsmittel 26 zwischen dem Kupplungsgehäuse 2 und dem Anschlussabschnitt 19 des Anschlusselementes 18 sind im Bereich des Anschlussbohrungsabschnitts 6 des Kupplungsgehäuses 2 an diametralen Stellen Durchbrüche 17 vorgesehen, die in Form von Bohrungen mit dem Durchmesser d gestaltet sind. Der Durchmesser d dieser Durchbrüche 17 ist größer als der Außendurchmesser der bei der Ausführungsform gemäß Figur 2 vorgesehenen Stifte 28 in Form von Kerbstiften, die in entsprechend angeordneten Aufnahmebohrungen 27 des Anschlussabschnitts 19 des Anschlusselementes 18 einsitzen. Aufgrund des Spaltes zwischen der Außenkontur 20 des Anschlusselementes 18 und der Innenkontur 9 des Kupplungsgehäuses 2 im Bereich des Anschlussbohrungsabschnittes 6 und der Bemessung des Außendurchmessers der Stifte 28 im Verhältnis zu den als Bohrungen gestalteten Durchbrüchen 17 sind sowohl eine Axialbewegung in Richtung der Längsachse 1 zwischen dem Anschlusselement 18 und dem Kupplungsgehäuse 2 als auch Winkelbewegungen, Radialbewegungen oder Umfangsbewegungen möglich, so dass zwischen der Anschlussbohrung 11 und dem Klemmabschnitt 21 Lageabweichungen kompensiert werden.

In Figur 4 ist eine abweichende Gestaltung der Verbindungsmittel 26 dargestellt. Diese umfassen zwar weiterhin die Durchbrüche 17 im Bereich des Kupplungsgehäuses 2, jedoch sind anstelle von Stiften 28 Innensechskantschrauben 29 vorgesehen. Anstelle als zylindrische Bohrungen sind in diesem Fall die Aufnahmebohrungen 28 als Gewindebohrungen gestaltet.

### Bezugszeichenliste

- 1: Längsachse
- 2: Kupplungsgehäuse
- 3: Ausformung
- 4: Nut
- 5: Aufnahmebohrungsabschnitt
- 6: Anschlussbohrungsabschnitt
- 7: erstes axiales Ende
- 8: zweites axiales Ende
- 9: Innenkontur
- 10: Kupplungsinnenteil
- 11: Anschlussbohrung
- 12: Mitnahmeelement
- 13: Anlaufscheibe
- 14: Sicherungsring
- 15: Dichtungsring
- 16: Schmiernippel
- 17: Durchbruch
- 18: Anschlusselement
- 19: Anschlussabschnitt
- 20: Außenkontur
- 21: Klemmabschnitt
- 22: Schlitz
- 23: Backen
- 24: Klemmbohrung
- 25: Schraubenbohrung
- 26: Verbindungsmittel
- 27: Aufnahmebohrung
- 28: Stift/Kerbstift
- 29: Schraube/Innensechskantschraube
- d: Durchmesser

## Patentansprüche

1. Kupplung, insbesondere Drehmomentbegrenzungskupplung, mit
- einer Längsachse (1),
- einem Kupplungsgehäuse (2),
- das rohrförmig gestaltet ist und
- das einen Aufnahmebohrungsabschnitt (5) aufweist,
- einem Kupplungsinnenteil (10),
- das in dem Aufnahmebohrungsabschnitt (5) des Kupplungsgehäuses (2) aufgenommen ist, so dass es vom Kupplungsgehäuse (2) koaxial umgeben ist, und
- Mitnahmeelementen(12),
- die eine Drehmitnahme zwischen dem Kupplungsgehäuse (2) und dem Kupplungsinnenteil (10) bewirken,
**dadurch gekennzeichnet, dass**
- das Kupplungsgehäuse (2)
ausgehend von einem ersten axialen Ende (7) einen Anschlussbohrungsabschnitt (6) aufweist, der in einer die Längsachse (1) rechtwinklig schneidenden Querschnittsebene gesehen, eine umlaufende Innenkontur (9) aufweist, die von einem Kreis abweicht,
- ein Anschlusselement (18) vorgesehen ist,
das einen Anschlussabschnitt (19) aufweist, mit dem es in dem Anschlussbohrungsabschnitt (6) des Kupplungsgehäuses (2) aufgenommen ist, der in einer die Längsachse (1) rechtwinklig schneidenden Querschnittsebene eine Außenkontur (20) aufweist, die der Innenkontur (9) des Kupplungsgehäuses (2) mit einem radialen Abstand folgt, so dass Spiel zwischen den beiden gegeben ist, und
- Verbindungsmittel (26) vorgesehen sind,
die das Kupplungsgehäuse (2) mit dem Anschlusselement 18) so verbinden, dass beide begrenzt relativ zueinander beweglich gehalten sind.

2. Kupplung nach Anspruch 1,
**dadurch gekennzeichnet,**
**dass** die Verbindungsmittel (26) eine begrenzte Winkel- und/oder Axialbewegung und/oder Radialbewegung zulassen.

3. Kupplung nach Anspruch 1,
**dadurch gekennzeichnet,**
**dass** die Verbindungsmittel (26) im Bereich des Anschlussbohrungsabschnitts (6) des Kupplungsgehäuses (2) und des Anschlussabschnitts (19) des Anschlusselements (18) angeordnet sind und mindestens einen Durchbruch (17) im Kupplungsgehäuse (2) und je Durchbruch (17) eine(-n) in jeweils eine Aufnahmebohrung (27) des Anschlusselementes (18) einsetzbaren Stift (28) oder Schraube (29) umfassen.

4. Kupplung nach Anspruch 3,
**dadurch gekennzeichnet,**
**dass** der Stift (28) oder die Schraube (29) den Durchbruch (17) mit Spiel durchgreift.

5. Kupplung nach Anspruch 1,
**dadurch gekennzeichnet,**
**dass** das Kupplungsgehäuse (2) über seine gesamte axiale Länge parallel zur Längsachse (1) verlaufende rippenförmige Ausformungen (3) aufweist, die in der Innenkontur (9) des Kupplungsgehäuses (2) Nuten (4) bilden.

## Claims

1. Coupling, particularly torque limiting coupling, comprising
- a longitudinal axis (1),
- a coupling housing (2),
- formed tubular and
- having a receiving bore portion (5),
- an inner coupling element (10),
- which is received in the receiving bore portion (5) of the coupling housing (2), so that it is coaxially surrounded by the coupling housing (2), and
- torque transmitting elements (12),
- serving for a rotational drive transmission between the coupling housing (2) and the inner coupling element (10),
**characterised in that**
- the coupling housing (2)
has, starting from a first axial end (7), a connection bore portion (6), which has, when seen in a cross-sectional plane intersecting at a right angle the longitudinal axis (1), a circumferentially extending inner contour (9), deviating from a circle,
- a connection element (18) is provided,
having a connection portion (19), with which it is received in the connection bore portion (6) of the coupling housing (2), which connection portion (19) has in a cross-sectional plane, intersecting at a right angle the longitudinal axis (1), an outer contour (20) following the inner contour (9) of the coupling housing (2) at a radial distance, so that a clearance is provided between the two, and
- connection means (26) are provided,
which connect the coupling housing (2) to the connection element (18) such, that both are held movable relative to each other in a limited manner.

2. Coupling according to claim 1,
**characterised in that**
the connection means (26) allow a limited angular movement and/or axial movement and/ or radial movement.

3. Coupling according to claim 1,
**characterised in that**
the connection means (26) are arranged in the area of the connection bore portion (6) of the coupling housing (2) and of the connection portion (19) of the connection element (18) and comprise at least one opening (17) in the coupling housing (2) and for each opening (17) comprise a pin (28) or a screw (29) insertable, respectively, into a receiving bore (27) of the connection element (18).

4. Coupling according to claim 3,
**characterised in that**
the pin (28) or the screw (29) pass through the opening (17) with clearance.

5. Coupling according to claim 1,
**characterised in that**
the coupling housing (2) has over its total axial length rib-like projections (3), extending parallel to the longitudinal axis (1), which form grooves (4) in the inner contour (9) of the coupling housing (2).

## Revendications

1. Embrayage, en particulier embrayage à limiteur de couple, comportant
- un axe longitudinal (1),
- un carter d'embrayage (2),
- qui est configuré sous forme tubulaire et
- qui présente une partie de perçage de réception (5),
- une partie intérieure d'embrayage (10),
- qui est logée dans la partie de perçage de réception (5) du carter d'embrayage (2), de telle sorte qu'elle est entourée de façon coaxiale par le carter d'embrayage (2), et
- des éléments d'entraînement (12),
- qui provoquent un entraînement rotatif entre le carter d'embrayage (2) et la partie intérieure d'embrayage (10),
**caractérisé en ce que**
- le carter d'embrayage (2),
à partir d'une première extrémité axiale (7), présente une partie de perçage de raccordement (6) qui, vu dans un plan de section transversale perpendiculaire à l'axe longitudinal (1), présente un contour intérieur périphérique (9) non circulaire,
- il est prévu un élément de raccordement (18),
qui présente une partie de raccordement (19) avec laquelle il est logé dans la partie de perçage de raccordement (6) du carter d'embrayage (2), et qui présente dans un plan de section transversale perpendiculaire à l'axe longitudinal (1) un contour extérieur (20) qui suit le contour intérieur (9) du carter d'embrayage (2) avec une certaine distance radiale, de telle sorte que le jeu entre les deux éléments est bien défini, et
- il est prévu des moyens de liaison (26),
qui relient le carter d'embrayage (2) à l'élément de raccordement (18) de telle sorte que ces deux pièces sont maintenues avec une mobilité limitée l'une par rapport à l'autre.

2. Embrayage selon la revendication 1,
**caractérisé en ce que**
les moyens de liaison (26) permettent un mouvement angulaire et/ou un mouvement axial et/ou un mouvement radial limité.

3. Embrayage selon la revendication 1,
**caractérisé en ce que**
les moyens de liaison (26) sont disposés dans la zone de la partie de perçage de raccordement (6) du carter d'embrayage (2) et de la partie de raccordement (19) de l'élément de raccordement (18), et comprennent au moins un passage (17) dans le carter d'embrayage (2) et pour chaque passage (17) une goupille (28) ou une vis (29) pouvant être introduite dans respectivement un perçage de réception (27) de l'élément de raccordement (18).

4. Embrayage selon la revendication 3,
**caractérisé en ce que**
la goupille (28) ou la vis (29) traverse le passage (17) avec un certain jeu.

5. Embrayage selon la revendication 1,
**caractérisé en ce que**
le carter d'embrayage (2) présente sur toute sa longueur des déformations (3) en forme de nervures s'étendant parallèlement à l'axe longitudinal (1), qui forment dans le contour intérieur (9) du carter d'embrayage (2) des rainures (4).
